# EUROPÄISCHE PATENTSCHRIFT

(11) **EP 4 296 610 B1**
(45) Veröffentlichungstag und Bekanntmachung des Hinweises auf die Patenterteilung: **25.11.2026**
(21) Anmeldenummer: 23176289.9
(22) Anmeldetag: 31.05.2023
(51) Int. Cl.: G01B 5/14, B29B 7/12, B29B 7/18

(54) **VERFAHREN ZUR MESSUNG DES VERSCHLEISSES EINER MISCHKAMMERWAND EINES MISCHERS**
METHOD FOR MEASURING THE WEAR OF A MIXING CHAMBER WALL OF A MIXER
PROCÉDÉ DE MESURE DE L'USURE D'UNE PAROI DE CHAMBRE DE MÉLANGE D'UN MÉLANGEUR

(30) Priorität: 22.06.2022 DE 102022206256
(43) Veröffentlichungstag der Anmeldung: 27.12.2023
(73) Patentinhaber: Continental Reifen Deutschland GmbH, 30175 Hannover (DE)
(72) Erfinder: Kuck, Detlef, 30165 Hannover (DE)
(74) Vertreter: Continental Corporation

(56) Entgegenhaltungen:
- CN-A- 113 916 102
- DE-A1- 102016 215 167
- US-A1- 2009 289 620

## Beschreibung

In Mischern, insbesondere bei Mischern für die Reifenherstellung, werden Ausgangsmaterialien mechanisch miteinander vermischt und eine Materialmischung erzeugt. Dieser Vorgang findet in einer Mischkammer des Mischers statt, in der ein Mischrotor oder mehrere Mischrotoren angeordnet sind. Jeder Mischrotor ist um eine Rotorachse rotierbar und wird von einer Antriebseinrichtung, beispielsweise einem Elektromotor, mechanisch angetrieben. Durch die Antriebseinrichtung werden erhebliche mechanische Leistungen an den Mischrotor oder die Mischrotoren übertragen, welche notwendig sind, damit der oder die Mischrotoren die Ausgangsmaterialien bzw. die entstehende Materialmischung mit den bisweilen sehr hohen Viskositäten und Fließgrenzen plastisch verformen und homogenisieren kann. Beispielsweise bei der Reifenherstellung ist zum Herstellen von Gummimischungen ein mechanischer Leistungseintrag in der Größenordnung von mehreren Megawatt der Normalfall.

Bei dem Mischen treten häufig starke Reibung an der Mischkammer und den Mischrotoren sowie sehr große Kräfte, Drücke und Scherbeanspruchungen in den Ausgangsmaterialien bzw. der entstehenden Materialmischung auf. Hierdurch sind der Mischrotor bzw. die Mischrotoren und die Mischkammer an ihren Oberflächen mechanisch stark durch Reibung belastet und können einem beträchtlichen Verschleiß unterliegen. Um einen optimalen Zeitpunkt für eine Wartung der Mischkammerwand abzuschätzen, ist es wünschenswert, den bereits erfolgten Verschleiß der Mischkammerwand durch Verschleißmessungen genau festzustellen.

Hierzu wird üblicherweise bestimmt, um welche Verschleißtiefe die Mischkammerwand bereits abgetragen worden ist. Eine bekannte Möglichkeit ist, mit Fühlerlehren den Abstand zwischen der Mischkammerwand und dem Mischrotor zu messen und die dabei gemessenen Abstandswerte mit bekannten nominellen Abstandswerten zu vergleichen, die im Neuzustand des Rotors bzw. der Mischkammerwand gegeben sind bzw. waren. Die Differenz aus gemessenen Abstandswerten an den Messstellen und nominellen Abstandswerten - gegebenenfalls unter Berücksichtigung des Verscheißes auch des Mischrotors - lässt Rückschlüsse auf die Verschleißtiefe zu, um die die Mischkammerwand verschlissen ist und lässt eine Prognose zu, welche Restlebensdauer für die Mischkammerwand erwartbar ist. Nachteilig ist dabei, dass die Durchführung solch eines Messverfahrens mit Fühlerlehren nur in denjenigen Randbereichen der Mischkammerwand möglich ist, die für das Einschieben der Fühlerlehren zwischen Mischkammerwand und Rotor direkt zugänglich sind, d.h. insbesondere an solchen Randbereichen der Mischkammerwand, die durch z.B. eine geöffnete Beschickklappe oder einen geöffneten Klappsattel händisch zugänglich sind. Nachteilig ist dabei auch, dass der Verschleiß nicht gleichmäßig über die Mischkammerwand verteilt ist, sondern meist inhomogen ist und so unentdeckt bleiben kann, dass an anderen als den messbaren Stellen die Mischkammerwand bereits verschlissener ist, so dass falsche Rückschlüsse auf die Restlebensdauer der Mischkammerwand gezogen werden können.

Eine weitere bekannte Möglichkeit, auch an nicht über eine Beschickklappe oder einen Klappsattel zugänglichen Orten innerhalb der Mischkammer den Verschleiß der Mischkammerwand zu messen, ist der Einsatz eines kapazitiven Abstandssensors auf dem Mischrotor, so dass durch Drehen des Mischrotors innerhalb der Mischkammer der kapazitive Abstandssensor an verschiedene Stellen der Mischkammerwand hinführbar ist, um Rückschlüsse auf die Verschleißtiefe zu ziehen. Nachteilig ist dabei, dass diese Messung bedingt durch das Messprinzip der Kapazitätsmessung lediglich für solche Arten von Mischern geeignet ist, die auf dem Mischrotor in der Nähe der Mischkammerwand hinreichend große Flächen aufweisen, um die kapazitiven Sensoren, die für eine hinreichende Messgenauigkeit einen großen Flächenbedarf haben, montieren zu können. In der Praxis ist dies bei ineinandergreifenden Mischrotoren häufig noch möglich, scheitert jedoch bei anderen Geometrien des Mischrotors oder der Mischrotoren.

DE 10 2016 215 167 A1 betrifft eine Messvorrichtung zur Bestimmung des Verschleißes eines Innenmischers. An einem Misch-Flügel eine Rotors ist eine Sensoranordnung befestigbar, die wenigstens einen Spalt-Sensor als Mess-Sensor für den Abstand von sich gegeneinander bewegbaren Teilen aufweist.

US 2009/289620 A1 betrifft eine Vorrichtung zur Messung des Abstands zwischen einem Bauteil und einer Fläche, über die und relativ zu der sich das Bauteil bewegt. Die Vorrichtung hat ein erstes Referenzelement und ein zweites Referenzelement, das dem ersten Referenzelement gegenüberliegt. Die Vorrichtung verfügt über einen Sensor, der den Abstand zwischen dem ersten und dem zweiten Referenzelement misst.

Aufgabe der vorliegenden Erfindung ist daher, ein Verfahren der eingangs genannten Art bereitzustellen, welches die genannten Nachteile abmildert oder überwindet.

Die Erfindung betrifft ein Verfahren gemäß Anspruch 1sowie eine Verwendung gemäß Anspruch 15.

Die Aufgabe wird dadurch gelöst, dass bei einem Verfahren der eingangs genannten Art der Abstandssensor ein taktiler Sensor ist, welcher eine Auflagefläche und eine Abtastfläche aufweist, wobei während des Messschritts die Auflagefläche die Mischrotorspitze kontaktiert und die Abtastfläche die Mischkammerwand kontaktiert. Die Mischrotorspitze stellt hierbei denjenigen Teil eines Mischrotors dar, der radial am weitesten von der Rotorachse entfernt ist. Jeder Mischrotor hat üblicherweise entlang seiner axialen Erstreckung eine veränderliche Querschnittsfläche. Dies dient dazu, die Ausgangsmaterialien bzw. die Materialmischung durch Rotieren des Mischrotors wiederholt erneut zu greifen und zu deformieren. Beispielsweise weist der Mischrotor Rotorflügel auf, d. h. sich radial von der Rotormitte nach außen hin erstreckende flügelartige Erhebungen, die in axialer Richtung zudem schräg gestellt sein können. Diese können an der radial außenliegendsten Position des Mischrotors vergleichsweise dünn auslaufen, wohingegen die Rotorflügel für eine gute Biegemomentübertragung nahe der Rotorachse vergleichsweise breit ausgebildet sind. Als Mischrotorspitze wird bei solchen Rotorflügeln der radial am weitesten außen liegende Bereich des Mischrotors bezeichnet. Ein Mischrotor kann hierbei mehrere Rotorflügel sowie mehrere Mischrotorspitzen aufweisen.

Bei einem Mischer sind häufig zwei benachbarte Mischrotoren in einer einzigen Mischkammer angeordnet, wobei die beiden zugehörigen Rotorachsen parallel zueinander angeordnet sind. Die beiden Mischrotoren können hierbei so angeordnet und ausgestaltet sein, dass diese beispielsweise ineinandergreifen und gegenläufig rotierbar sind, um die Ausgangsmaterialien und die entstehende Mischung in der Mischkammer zu durchmischen. Alternativ können die beiden Mischrotoren auch so ausgestaltet sein, dass diese nicht ineinandergreifen, sondern dass jeder Rotor unabhängig von einer Verdrehung des benachbarten Rotors verdreht werden kann, beispielsweise auch gegenläufig.

Die Mischkammerwand erstreckt sich derart in Umfangsrichtung ganz oder teilweise um den Mischrotor oder die Mischrotoren herum, dass die Mischrotorspitze bzw. die Mischrotorspitzen mit einem nominell konstanten Abstand an der Mischkammerwand beim Rotieren des Mischrotors bzw. der Mischrotoren auf einer Kreisbahn vorbeigeführt werden. Durch bereits erfolgten Verschleiß weicht der tatsächliche Abstand entlang der Mischkammerwand hiervon jedoch um eine ortsveränderliche Verschleißtiefe ab, die es mit dem erfindungsgegenständlichen Verfahren zu messen gilt.

Erfindungsgemäß erfolgt bei dem ersten Montageschritt ein Anordnen und Befestigen des Abstandssensors auf der Mischrotorspitze bzw. einer der Mischrotorspitzen. Hierdurch ist der Abstandssensor als Ergebnis des ersten Montageschritts bei einem Verdrehen des Mischrotors entsprechend der Mischrotorspitze entlang der Mischkammerwand mit bewegbar. Der Montageschritt kann händisch erfolgen, indem der Abstandssensor durch eine geöffnete Beschickklappe oder einen geöffneten Klappsattel an die Mischrotorspitze angesetzt und befestigt wird. Das Befestigen kann beispielsweise mit Klebewachs erfolgen. Das Befestigen erfolgt auf wiederlösbare Weise, da der Abstandssensor nicht dauerhaft an dem Mischrotor verbleiben soll, sondern nach Beenden des Messens des Verschleißes wieder entfernt werden soll. Der Abstandssensor ist somit an unterschiedlichen Axialositionen des Mischrotors anordenbar und befestigbar und anschließend lösbar, so dass er an einer weiteren Position anordenbar und befestigbar ist.

Eine Axialposition ist hierbei die Position entlang der axialen Erstreckung des Mischrotors, d.h. in Richtung der Rotationsachse des Mischrotors. Die möglichen Axialpositionen, aus denen die Axialposition bei dem Montageschritt wählbar ist, stehen somit entlang der gesamten Länge des Mischrotors zur Verfügung und erlauben dort jeweils die erfindungsgemäße Messung des Verschleißes.

Der taktile Sensor als der Abstandssensor ist hierbei derart flach ausgeführt, dass er zum Messen des Abstands zwischen der Mischrotorspitze und der Mischkammerwand eingerichtet ist. Der Abstandssensor wird bei dem Montageschritt mit seiner Auflagefläche auf der Mischrotorspitze aufgelegt und befestigt, insbesondere wiederlösbar verklebt. Mittels der Auflagefläche wird der Abstandssensor somit in kraftübertragender Weise mit der Mischrotorspitze verbunden.

Auf der der Auflagefläche gegenüberliegenden Seite des Abstandssensors weist der Abstandssensor eine Abtastfläche auf. Die Abtastfläche ist insbesondere dazu eingerichtet, die Information über den Abstand zwischen der Abtastfläche und der Auflagefläche in eine eindeutige Information umzusetzen, die in einem Abstandssensorsignal enthalten ist.

Nach dem ersten Montageschritt erfolgt ein Messschritt, welcher ein Verdrehen des Mischrotos innerhalb der Mischkammer umfasst. Bei dem Verdrehen wird der befestigte Abstandssensor zusammen mit der Mischrotorspitze entlang der Mischkammerwand verfahren. Der Abstandssensor wird somit innerhalb der Mischkammer auf einer Kreisbahn verfahren, die sich an der ersten Axialposition in axialer Richtung des Mischrotors innerhalb der Mischkammer befindet. Der Abstandssensor befindet sich dabei zwischen der Mischrotorspitze und der Mischkammerwand und sensiert den Abstand, um den die Mischkammerwand von der Mischrotorspitze beabstandet ist. Die Abtastfläche berührt dabei die Mischkammerwand. Je nach Abstand zwischen der Mischkammerwand und der Mischrotorspitze wird der dazwischen befindliche Abstandssensor stärker oder weniger stark deformiert, insbesondere zusammengedrückt. Bei geringeren Abständen zwischen Mischrotorspitze und Mischkammerwand wird der Abstandssensor stärker mechanisch zusammengedrückt, also verformt, bei größeren Abständen weniger.

Der Abstandssensor gibt dabei ein zeitveränderliches elektrisches Abstandssensorsignal in Abhängigkeit seiner Verformung aus, welches die zeitveränderliche Information über den Abstand der Abtastfläche von der Grundfläche beinhaltet und dem Abstand zwischen der Mischkammerwand und der Mischrotorspitze entspricht. Das Ausgeben des Abstandssensorsignals muss hierbei keine aktive Signalerzeugung sein, sondern kann auch das bloße Beeinflussen eines an anderer Stelle erzeugten elektrischen Signals sein, beispielsweise durch Verändern eines elektrischen Widerstands in dem Abstandssensor je nach Abstand zwischen der Abtastfläche und der Auflagefläche.

Ein Auswerten des Abstandssensorsignals, insbesondere des Zeitverlaufs des Abstandssensorsignals während des Verdrehens des Mischrotors, erlaubt die Gewinnung von Informationen über den Verlauf des Abstands zwischen Mischrotorspitze und Mischkammerwand an denjenigen Stellen, entlang derer der Abstandssensor über die Mischkammerwand verfahren wird, insbesondere dessen Zeitverlauf. Hierdurch ist quantitativ ersichtlich, wie tief das ursprünglich vorhandene Material der Mischkammerwand abgetragen wurde.

Um den Verschleiß möglichst gering zu halten und eine große Lebensdauer eines solchen Mischers zu gewährleisten, ist die Mischkammer häufig mit einer besonders verschleißfesten Hartpanzerung ausgekleidet. Die Hartpanzerung bildet insofern die Mischkammerwand, die die Mischkammer nach außen hin begrenzt. Die Hartpanzerung ist ihrerseits in einem Mischergehäuse angeordnet, das ein weniger hartes und nicht derart verschleißfestes Grundmaterial aufweist oder aus diesem besteht, beispielsweise Grauguss.

Um dem fortschreitenden Verschleiß der Mischkammerwand beim Betreiben eines Mischers wirtschaftlich effizient zu begegnen, ist die Mischkammerwand auswechselbar in dem Mischergehäuse angeordnet und somit erneuerbar. Hierzu ist die Mischkammerwand beispielsweise als eine Mehrzahl auswechselbarer Wandelemente ausgestaltet. Die Mischkammerwand, insbesondere die Wandelemente, weisen beispielsweise Hartmetall aus oder bestehen daraus, beispielsweise ein oder mehrere Metallkarbide.

Die Mischkammer weist beispielsweise zwei Mischkammerhälften auf, welche demontierbar sind. Hierdurch ist das Entnehmen, Warten und Erneuern des Mischrotors oder der Mischrotoren möglich. Auch ist dabei die Mischkammerwand für eine Wartung zugänglich, insbesondere für ein etwaiges Auswechseln der Mischkammerwand, beispielsweise der Wandelemente.

Beim Betreiben eines Mischers besteht aus wirtschaftlichen Überlegungen das grundsätzliche Interesse, einen kostspieligen Wechsel der Mischkammerwand oder zumindest von Teilen der Mischkammerwand möglichst lange hinauszuzögern. Zugleich besteht aber für den Betreiber des Mischers das Interesse, diesen Wechsel noch rechtzeitig durchzuführen, bevor die Mischkammerwand aus Hartpanzerung an einer oder mehreren Orten soweit abgetragen ist, dass bereits auch das wesentlich weichere dahinter befindliche Grundmaterial des Mischergehäuses verschlissen wird, da dabei schlimmstenfalls ein wirtschaftlicher Totalschaden möglich ist, beispielsweise, falls das Grundmaterial bis in Kühlkanäle für Kühlwasser hinein verschlissen ist und Kühlwasser während des Betriebs in den Mischer austritt.

Die Erfindung erlaubt ein besonders präzises Messen und Lokalisieren des quantitativen Verschleißes der Mischkammerwand bzw. Mischkammerwände. Hierdurch ist eine besonders wirtschaftliche Wartung oder eine teilweise oder vollständige Erneuerung einer hartgepanzerten Mischkammerwand möglich und eine zuverlässige Abschätzung der Restlebensdauer eines Mischers möglich.

Die Aufgabe wird auch gelöst durch die Verwendung eines taktilen Sensors zum Durchführen des Verfahrens, insbesondere in einem besagten Messaufbau zum Bestimmen eines Spaltdickenwerts zwischen einer Mischrotorspitze und einer Mischkammerwand eines Mischers.

Weitere Ausgestaltungen ergeben sich auch aus den abhängigen Patentansprüchen sowie aus der folgenden Beschreibung.

**In** einer Weiterbildung der Erfindung ist vorgesehen, dass die Mischrotorspitze eine in Bezug auf die Rotorachse radial nach außen hin gerichtete Rotorspitzenfläche aufweist, auf welcher bei dem Montageschritt das Anordnen und Befestigen des Abstandssensors erfolgt. Hierdurch ist als Ergebnis des Montageschritts der Abstandsssensor besonders stabil an dem Mischrotor ausgerichtet. Die Vorteile des erfindungsgemäßen Verfahrens kommen somit bei einer derart orientierten Rotorspitzenfläche besonders gut zum Tragen.

**In** einer Weiterbildung der Erfindung ist vorgesehen, dass die Rotorspitzenfläche eine Breite von weniger als 50 mm, insbesondere von weniger als 30mm, weiter insbesondere von weniger als 20 mm aufweist. Die Eignung der Erfindung, auch bei derart schmalen Rotorspitzenflächen eine zuverlässige Messung des Verschleißes der Mischkammerwand zu gewährleisten, macht diese besonders vielfältig einsetzbar. Insbesondere ist das Verfahren weniger stark auf Mischer mit Rotoren mit großen radial nach außen hin gerichteten Rotospitzenflächen beschränkt, wie etwa bei Mischern mit ineinandergreifenden Mischrotoren.

**In** einer Weiterbildung der Erfindung ist vorgesehen, dass der Mischer ein Tangentialmischer, insbesondere ein Tangentialmischer für die Herstellung von Materialmischungen für die Reifenherstellung ist, weiter insbesondere ein Tangentialmischer für die Herstellung von Grundmischungen für die Reifenherstellung. Dies bedeutet, dass die Rotoren tangierend ausgebildet sind, insbesondere nicht ineinandergreifend. Anders als ineinandergreifende Mischer weisen Tangentialmischer besonders schmale Rotorspitzenflächen auf, die ein Messen mit kapazitiven Abstandssensoren nur unter Einbußen in der Messgenauigkeit oder gar nicht ermöglichen. Die Erfindung steigert somit gerade bei Mischern mit tangierenden Rotoren die Messgenauigkeit bzw. ermöglicht erst eine solche Messung entlang großer Bereiche der Mischkammerwand.

**In** einer Weiterbildung der Erfindung ist vorgesehen, dass während zumindest eines Teils des Messschritts die Mischkammerwand und die Mischrotorspitze, insbesondere die Rotorspitzenfläche, durch einen Radialspalt voneinander beabstandet angeordnet sind oder werden. Hierdurch ist eine besonders präzise Messung des Verschleißes möglich. Insbesondere bedeutet die Beabstandung der Rotorspitzenfläche und der Mischkammerwand durch einen Radialspalt, dass der Abstandssensor Flächenelemente an der Rotorspitzenfläche und der Mischkammerwand kontaktiert, die zueinander parallel orientiert sind. Hierdurch ist die Messung besonders zuverlässig und wenig fehleranfällig.

**In** einer Weiterbildung der Erfindung ist vorgesehen, dass der Radialspalt eine Spaltdicke zwischen 3 mm und 10 mm, insbesondere zwischen 3 mm und 8 mm, weiter insbesondere zwischen 3 und bis 5 mm, aufweist. Hierbei wirkt das erfindungsgemäße Verfahren besonders vorteilhaft, insbesondere führen die geringen zu messenden Spaltdicken bei dem erfindungsgemäßen Verfahren zu besonders geringen Messfehlern, insbesondere zu geringeren Messfehlern als bei kapazitiven Messverfahren.

**In** einer Weiterbildung der Erfindung ist vorgesehen, dass der Abstandssensor eine Grundplatte und ein Abtastblech aufweist, welches sich als konvexer Bogen über einen Bereich der Grundplatte erstreckt, wobei die Grundplatte die Auflagefläche aufweist und der konvexe Bogen die Abtastfläche aufweist. Hierdurch ist der Abstandssensor besonders stabil und verwindungssteif und wenig anfällig gegen Beschädigungen beim z.B. Verschieben entlang der Mischkammerwand. Auch erlaubt diese Geometrie eine besonders flache Ausgestaltung des Abstandssensors für das präzise Messen der geringen Abstände z.B. zwischen der Rotorspitzenfläche und der Mischkammerwand.

**In** einer Weiterbildung der Erfindung ist vorgesehen, dass der Abstandssensor eine aufbauende Mindesthöhe von weniger als 3 mm, insbesondere von weniger als 2,5 mm, aufweist. Hierdurch ist auch das Messen von sehr geringen Abständen zwischen dem Mischrotor, insbesondere der Mischrotorspitze, und der Mischkammerwand möglich.

**In** einer Weiterbildung der Erfindung ist vorgesehen, dass der Abstandssensor, insbesondere die Grundplatte, eine Grundplattenbreite von höchstens 50 mm, insbesondere von höchstens 30 mm, insbesondere von höchstens 20 mm, aufweist. Dies ermöglicht, auch bei besonders schmalen Rotorspitzenflächen eine zuverlässige Messung des Verschleißes der Mischkammerwand zu gewährleisten. Insbesondere ist das Verfahren weniger stark auf Mischer mit Rotoren mit großen radial nach außen hin gerichteten Rotospitzenflächen beschränkt, wie etwa bei Mischern mit ineinandergreifenden Mischrotoren.

**In** einer Weiterbildung der Erfindung ist vorgesehen, dass ein Winkelsensor die Winkelposition des Mischrotors in Bezug auf die Mischkammer sensiert und ein der Winkelposition korrespondierendes Winkelsensorsignal erzeugt. Hierdurch wird ermöglicht, zu jeder Messposition, in der der Abstandssensor den Abstand zwischen dem Mischrotor und der Mischkammerwand sensiert, die jeweilige Position des Abstandssensors festzustellen.

**In** einer Weiterbildung der Erfindung ist vorgesehen, dass durch Auswerten des Abstandssensorsignals, insbesondere mittels einer Auswerteeinheit, korrespondierende Spaltdickenwerte und/oder Verschleißtiefenwerte bestimmt werden. Hierdurch ist die Information über den Abstand zwischen dem Mischrotor, insbesondere zwischen der Rotorspitzenfläche, und der Mischkammerwand aus dem Abstandssensorsignal rekonstruierbar und eine Bewertung der Restlebensdauer der Mischkammerwand abschätzbar.

**In** einer Weiterbildung der Erfindung ist vorgesehen, dass durch Auswerten des Winkelsensorsignals, insbesondere mit einer oder der Auswerteeinheit, korrespondierende Winkelpositionswerte bestimmt werden. Hierdurch ist für jeden Messpunkt, an dem ein Verschleißtiefenwert bestimmt wird, die Messposition in tangentialer Richtung entlang der Mischkammerwand bestimmbar. Somit ist eine besonders genaue Aussage über die örtliche Verteilung des Verschleißes an der Mischkammerwand möglich.

**In** einer Weiterbildung der Erfindung ist vorgesehen, dass bei dem Messschritt durch das Verdrehen des Mischrotors der Abstandssensor, insbesondere die Abtastfläche, entlang einer Tastspur über die Mischkammerwand geführt wird. Hierdurch ist eine Mehrzahl von Messpunkten entlang einer Trajektorie auf der Mischkammerwand bestimmbar. Somit kann entlang der Trajektorie der Verschleiß lokalisiert werden und die Restlebensdauer aus dem entlang der Trajektorie gemessenen Verschleiß besonders zuverlässig bestimmt werden. Die Position der Tastspur entspricht dabei der Axialposition, an der der Abstandssensor vor dem Entlangführen auf dem Mischrotor bei dem Montageschritt angeordnet worden ist. Somit ist möglich, dass nacheinander mehrere Tastspuren bei mehreren Messchritten an jeweils anderen Axialpositionen abgefahren werden, falls zwischen den Messchritten die Axialposition des Abstandssensors durch zwischenzeitliches Durchführen weiterer Montageschritte geändert wird.

**In** einer Weiterbildung der Erfindung umfasst das Verfahren die folgenden Verfahrensschritte, welche nach Beenden des auf den ersten Montageschritt folgenden Messschritts durchgeführt werden:
- einen oder mehrere weitere Montageschritte, jeweils umfassend ein Anordnen und Befestigen eines oder des Abstandssensors an von der ersten Axialposition verschiedenen weiteren Axialpositionen der Mischrotorspitze oder einer weiteren Mischrotorspitze,
- einen oder mehrere weitere Messschritte, welche nach dem weiteren beziehungsweise nach jedem der mehreren weiteren Montageschritte durchgeführt werden,
wobei bei jedem der weiteren Messschritte der Abstandssensor entlang einer weiteren Tastspur über die Mischkammerwand geführt wird.

Hierdurch wird eine Mehrzahl von Tastspuren an den verschiedenen Axialpositionen von dem Abstandssensor abgefahren und die zugehörigen Spaltdickenwerte bzw. Verschleißtiefenwerte ausgewertet. Somit ist das Gewinnen von Information über den bereits vonstattengegangenen Verschleiß an der Mischkammerwand sowohl in Abhängigkeit der Axialposition, als auch in Abhängigkeit der Winkelposition möglich. Hierdurch wird ermöglicht, eine differenzierte lokalisierte Betrachtung der Verteilung des Verschleißes entlang der Mischkammerwand vorzunehmen, und zwar grundsätzlich an allen für das Verfahren zugänglichen Axialpositionen und Winkelpositionen.

**In** einer Weiterbildung der Erfindung ist vorgesehen, dass entlang der Tastspur oder entlang der Tastspuren verschiedenen einzelnen Messpositionen des Abstandssensors jeweils ein zugehöriger Winkelpositionswert, ein zugehöriger Spaltdickenwert und/oder Verschleißtiefenwert und ein zugehöriger Axialabstandswert zugeordnet werden. Hierdurch ist eine Vielzahl von Verschleißdatenpunkten erstellbar, die einen Zusammenhang zwischen Koordinaten auf der Mischkammerwand und dem dortigen Verschleiß herstellen.

**In** einer Weiterbildung der Erfindung umfasst das Verfahren ein Erstellen einer topografische Karte der Spaltdickenwerte und/oder der Verschleißtiefenwerte abhängig von dem Winkelpositionswert und dem Axialabstandswert. Hierdurch ist ein besonders zielführendes Bewerten des Erfordernisses einer Wartung, insbesondere eines Austauschs der Mischkammerwand, beispielsweise von Wandelementen, möglich.

Das Bestimmen der Verschleißtiefe an der Mischkammerwand kann hierbei unter Anwendung eines Rotorverschleißkorrekturschritts durchgeführt werden. Dabei wird zunächst die Verschleißhöhe bestimmt, um welche die Rotorspitze, insbesondere die Rotorspitzenfläche, bezogen auf das nominelle Maß an dem zuvor noch neuen Mischrotor aufgrund des bisherigen Rotorverschleißes dichter an der Rotorachse liegt. Die Berücksichtigung dieser Verschleißhöhe kann von der gemessenen Spaltdicke bzw. Verschleißtiefe der Mischkammerwand abgezogen werden, um so den an der Mischkammerwand entstandenen Verschleiß möglichst genau zu quanitfizieren. Dies kann an jeder für das Verfahren genutzten Axialposition des Rotors durchgeführt werden. Hierdurch wird auch ein ungleichmäßig in Axialrichtung des Mischrotors aufgetretener Verschleiß an der Mischrotorspitze adäquat berücksichtigt und Fehlschlüsse beim Bestimmen der Spaltdickenwerte bzw. der Verschleißtiefenwerte vermieden.

Nachfolgend wird die Erfindung anhand eines Ausführungsbeispiels des Verfahrens, dess Messaufbaus und der Verwendung des Abstandssensors näher erläutert. In der Zeichnung zeigen:
- Fig. 1:: eine Querschnittsansicht durch eine Mischkammer mit zwei Mischrotoren mit veränderlichen Drehwinkelpositionen und einem daran angeordneten und befestigten Abstandssensor
- Fig. 2:: den in Figur 1 mit der gestrichelten Linie gekennzeichneten und als "A" bezeichneten Ausschnitt bei einer ersten Drehwinkelposition,
- Fig. 3:: den Ausschnitt gemäß Fig. 2 bei einer zweiten Drehwinkelposition.

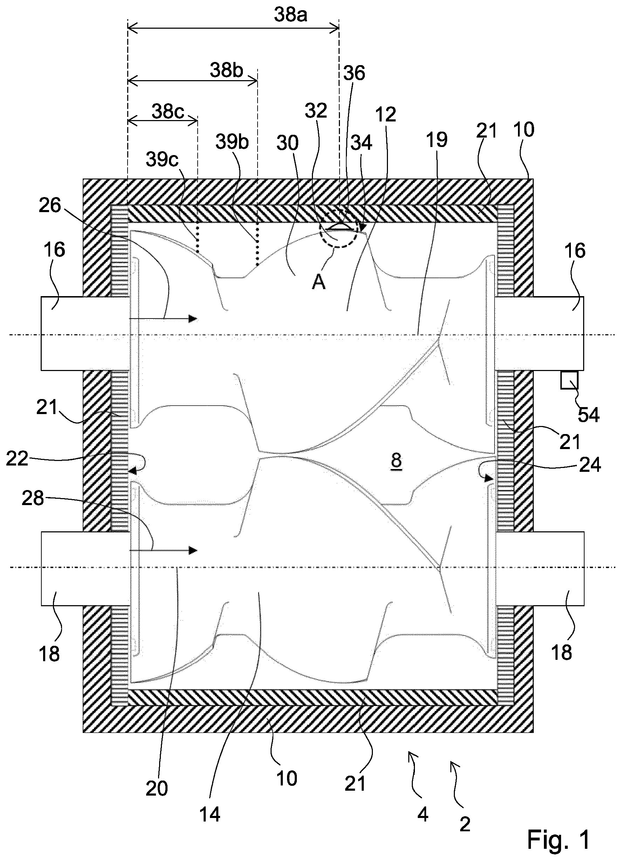

Figur 1 zeigt eine Querschnittsansicht eines Mischers 2 für das Mischen von Gummimischungen in einer Prozesskette der Reifenherstellung. Die Bildebene von Fig. 1 ist hierbei eine Ebene, die eine in Fig. 1 sichtbare untere Mischkammerhälfte 4 von einer darüber liegenden und nicht dargestellten oberen Mischkammerhälfte 6 trennt. Die untere Mischkammerhälfte 4 und die obere Mischkammerhälfte 6 schließen eine Mischkammer 8 ein, die zum Herstellen einer Materialmischung aus Ausgangsmaterialien eingerichtet ist. Die Mischkammerhälften 4, 6 sind demontierbar ausgebildet, um eine Wartung der Mischkammer zu ermöglichen. Die Mischkammerhälften 4, 6 sind Bestandteil eines Mischergehäuses 10 oder bilden ein solches. Das Mischergehäuse 10 weist ein Grundmaterial auf, welches hier Grauguss ist.

Innerhalb der Mischkammer 8 ist ein erster Mischrotor 12 angeordnet. Ebenso ist ein zweiter Mischrotor 14 innerhalb der Mischkammer 8 angeordnet. Grundsätzlich ist auch ein Aufbau eines Mischers derart möglich, dass in einer Mischkammer lediglich ein erster Mischrotor 10 angeordnet ist.

Der erste Mischrotor weist eine erste Rotorwelle 16 auf. Der zweite Mischrotor 14 weist eine zweite Rotorwelle 18 auf. Der erste Mischrotor 12 ist mittels einer Drehlagerung der ersten Rotorwelle 16 um seine erste Rotorachse 19 drehbar in Bezug auf das Mischergehäuse 10 und in Bezug auf die Mischkammer 8 gelagert.

Der zweite Mischrotor 14 ist mittels einer Drehlagerung der zweiten Rotorwelle 18 um seine zweite Rotorachse 20 drehbar in Bezug auf das Mischergehäuse 10 und in Bezug auf die Mischkammer 8 gelagert.

Jeder Mischrotor 12, 14 ist über seine jeweilige Rotorwelle 16, 18 durch eine nicht dargestellte Antriebseinrichtung, die vorliegend ein Elektromotor ist, mit einer mechanischen Antriebsleistung antreibbar. Durch die mechanische Antriebsleistung werden im Betrieb des Mischers Ausgangsmaterialien miteinander vermischt, beispielsweise verknetet. Hierdurch wird als Ergebnis des Mischens eine Materialmischung hergestellt, vorliegend eine Gummimischung für die Reifenherstellung. Die Ausgangsmaterialien werden in die Mischkammer 8 durch eine öffen- und schließbare Beschickklappe eingefüllt, welche oberhalb der Mischkammer 8 angeordnet ist. Nach Beenden des Mischens der Ausgangsmaterialien wird die dabei entstandene Materialmischung durch eine Klappsattelöffnung in der unteren Mischkammerhälfte 4 nach unten hin aus der Mischkammer 8 entnommen, gemäß der Darstellung der Figur 1 also in die Zeichenebene hinein.

Für eine hohe Lebensdauer des Mischers 2 ist das Mischergehäuse 8 mit einer Mischkammerwand 21 ausgekleidet, welche die Mischkammer 8 als Wandung umgibt und beim Mischvorgang einen Kontakt der Ausgangsmaterialien sowie der entstehenden Materialmischung mit dem vergleichsweise weichen Grundmaterial des Mischergehäuses 8 verhindert. Die Mischkammerwand 21 begrenzt also die Mischkammer 8 nach außen hin.

Die Mischkammerwand 21 ist als Hartpanzerung ausgebildet. Hierzu weist die Mischkammerwand 21 eine Mehrzahl von Wandelementen auf, die beispielsweise ein Hartmetall aufweisen, insbesondere ein oder mehrere Metallcarbide. Die Mischkammerwand 21 ist in dem Mischergehäuse 10 angeordnet, so dass die beim Mischen von den Ausgangsmaterialien und der entstehenden Materialmischung auf die Mischkammerwand 21 ausgeübten Druckspannungen, Scherspannungen sowie die auf die Mischkammerwand 21 ausgeübte Reibung nicht unmittelbar auf das verschleißanfälligere Grundmaterial des Mischergehäuses 8 übertragen werden.

Die Mischkammer 8 erstreckt sich von ihrem ersten axialen Ende 22 zu ihrem zweiten axialen Ende 24. Der erste Mischrotor 12 erstreckt sich entlang seiner Axialrichtung 26 innerhalb der Mischkammer 8 nahezu vollständig von dem ersten axialen Ende 22 der Mischkammer 8 bis hin zu dem zweiten axialen Ende 24 der Mischkammer 8. Nahezu vollständig meint hier, dass an dem ersten Ende 22 und an dem zweiten Ende 24 zumindest ein Spalt zwischen der zur Mischkammer 8 hin orientierten Fläche der Mischkammerwand 20 und dem ersten Mischrotor 12 besteht, so dass der erste Mischrotor 12 in Bezug auf das Mischergehäuse 10 frei drehen kann und zugleich gewährleistet ist, dass wenig oder gar kein Ausgangsmaterial oder Teile der Materialmischung an dem ersten axialen Ende 22 und dem zweiten axialen Ende 24 zwischen den Mischrotor und die Mischkammerwand 20 gerät.

Der zweite Mischrotor 14 erstreckt sich entlang seiner Axialrichtung 28 innerhalb der Mischkammer 8 nahezu vollständig von dem ersten axialen Ende 22 der Mischkammer 8 bis hin zu dem zweiten axialen Ende 24 der Mischkammer 8. Nahezu vollständig meint hier, dass an dem ersten Ende 22 und an dem zweiten Ende 24 zumindest ein Spalt zwischen der zur Mischkammer 8 hin orientierten Fläche der Mischkammerwand 20 und dem zweiten Mischrotor 14 bleibt, so dass der zweite Mischrotor 14 in Bezug auf das Mischergehäuse 10 frei drehen kann und zugleich gewährleistet ist, dass wenig oder gar kein Ausgangsmaterial oder Teile der Materialmischung an dem ersten axialen Ende 22 und dem zweiten axialen Ende 24 zwischen den zweiten Mischrotor 14 und die Mischkammerwand 20 gerät.

An dem ersten axialen Ende 22 und an dem zweiten axialen Ende 24 ist die Mischkammerwand 20 jeweils orthogonal zu der Axialrichtung 26 des ersten Mischrotors 12 und orthogonal zu der Axialrichtung 28 des zweiten Mischrotors orientiert. Die Oberfläche der Mischkammerwand 20 an dem ersten axialen Ende 22 und die Oberfläche der Mischkammerwand 20 an dem zweiten axialen Ende 24 sind parallel zueinander orientiert.

Der erste Mischrotor 12 weist mehrere Rotorflügel 30 auf. Jeder der Rotorflügel 30 erstreckt sich radial von der ersten Rotorachse 19 nach außen, wo er jeweils an einer Mischrotorspitze 32 endet. An seiner jeweiligen Mischrotorspitze 32 weist jeder der Rotorflügel 30 eine Rotorspitzenfläche 34 auf, welche radial nach außen von der ersten Rotorachse 19 weg gerichtet ist. Die Rotorspitzenfläche 34 weist hierbei eine Breite zwischen 20 mm und 30 mm auf. Der Übersichtlichkeit halber ist von den für den Fachmann in Figur 1 erkennbaren Rotorflügeln 30 nur einer exemplarisch mit Bezugszeichen versehen.

Auch der zweite Mischrotor 14 weist mehrere entsprechende Rotorflügel 30 auf. Jeder der Rotorflügel 30 erstreckt sich radial von der zweiten Rotorachse 20 nach außen, wo er jeweils an einer Mischrotorspitze 32 endet. An seiner jeweiligen Mischrotorspitze 32 weist jeder der Rotorflügel 30 eine Rotorspitzenfläche 34 auf, welche radial nach außen von der zweiten Rotorachse 20 weg gerichtet ist. Der Übersichtlichkeit halber ist von den für den Fachmann in Figur 1 erkennbaren Rotorflügeln 30 des zweiten Mischrotors ebenfalls nur einer exemplarisch mit Bezugszeichen versehen.

**Im** vorliegenden Ausführungsbeispiel sind die Rotorflügel 30, die Mischrotorspitzen 32 und die Rotorspitzenflächen 34 bei dem ersten Mischrotor 12 und bei dem zweiten Mischrotor 14 gleich ausgebildet, können jedoch grundsätzlich auch unterschiedlich ausgestaltet sein.

Zwischen dem ersten axialen Ende 22 und dem zweiten axialen Ende 24 weist die die Mischkammerwand 21 zumindest abschnittsweise die Geometrie einer Innenwand eines Hohlzylinders auf. Insbesondere ist möglich, dass die Mischkammerwand 21 bzw. deren Wandelemente zwischen dem ersten axialen Ende 22 und dem zweiten axialen Ende als Hohlzylinder bzw. als Elemente eines Hohlzylinders ausgebildet sind.

Die Mischrotoren 12 und 14 sind als tangierende Rotoren ausgebildet. Der Mischer 2 ist insoweit ein Tangentialmischer. Dies bedeutet, dass die Mischrotoren 12 und 14 nicht ineinandergreifen und somit unabhängig voneinander rotiert werden können.

Bei einem Verdrehen, d.h. Rotieren, der Mischrotoren 12, 14 bewegen sich die Rotorspitzenflächen 34 auf Kreisbahnen dicht entlang der zylinderförmigen Mischkammerwand 21. Zwischen einer Rotorspitzenfläche 34 und der Mischkammerwand 21 besteht jeweils ein Radialspalt mit einer Spaltdicke 35 zwischen 3 und 8 mm, um den die Rotorspitzenfläche 34 von der Mischkammerwand 21 beabstandet angeordnet ist.

Um bei dem Mischer 2 den erfolgten Verschleiß an der Mischkammerwand 21 ortsanhängig zu bestimmen, wird nachfolgend die Durchführung des erfindungsgemäßen Verfahrens an dem Ausführungsbeispiel erläutert. Soweit von der Bestimmung des Verschleißes der Mischkammerwand 21 die Rede ist, ist hiermit nachfolgend derjenige Teil der Mischkammerwand 21 gemeint, welcher sich zwischen dem ersten axialen Ende 22 und dem zweiten axialen Ende 24 erstreckt und insbesondere als zylinderförmige Innenwandung der Mischkammer 8 ausgebildet ist. Die parallelen Flächen an dem ersten axialen Ende 22 und dem zweiten axialen Ende 24 der Mischkammerwand 21 sind demgegenüber von wesentlich untergeordnetem Interesse, da diese Flächen wesentlich geringerem Verschleiß ausgesetzt sind als der dazwischenliegende Teil der Mischkammerwand 21, entlang welchem die Mischrotorspitzen 32 beim Mischen permanent im Wesentlichen konzentrisch vorbeigeführt werden.

Zunächst wird bei dem Verfahren an dem vorgenannten Mischer 2 ein erster Montageschritt durchgeführt. Bei diesem erfolgt ein Anordnen eines Abstandssensors 36 auf einer Rotorspitzenfläche 34 einer Mischrotorspitze 32. Der Abstandssensor 36 ist dabei ein taktiler Sensor, d.h. das Messprinzip des Abstandssensors 36 beruht auf dem Umsetzen eines mechanisch ertasteten Abstands zwischen zwei Oberflächen in ein Abstandssensorsignal, welches die Information über den ertasteten Abstand eindeutig repräsentiert.

Der Abstandssensor 36 wird dabei händisch an einer ersten Axialposition 38 angeordnet und auf der Rotorspitzenfläche 34 befestigt. Die erste Axialposition 38a ist dabei der Abstand des Abstandssensors 36 von dem ersten axialen Ende 22 der Mischkammerwand 21. Das Befestigen erfolgt mit einem geeigneten Klebemittel, beispielsweise mit einem oder mehreren Klebewachsstücken zwischen dem Abstandssensor 36 und der Rotorspitzenfläche 34.

Nach dem ersten Montageschritt erfolgt mit dem derart montierten und befestigten Abstandssensor 36 die Durchführung eines Messchritts. Der Messchritt umfasst ein Verdrehen, d.h. Rotieren, des ersten Mischrotors 12 in Bezug auf die Mischkammer 21, d.h. auch in Bezug auf das Mischergehäuse 10. Hierdurch wird der Abstandssensor 36 zusammen mit dem ersten Mischrotor 12 um die erste Rotorachse 19 verdreht. Dabei wird der Abstandssensor 36 auf einer Kreisbahn in deren tangentialen Richtung entlang der Innenseite der Mischkammerwand 21 geführt. Dabei sensiert der Abstandssensor 36 wie nachfolgend beschrieben den je nach Verschleiß und somit Ausdünnung der Mischkammerwand 21 unterschiedlichen Abstand entlang einer über der Mischkammerwand 21 abgefahrenen und in Figur 1 nicht dargestellten ersten Tastspur 39a, um den die Mischkammerwand 21 von der Rotorspitzenfläche 34 beabstandet angeordnet ist. Entsprechend dem Abstand erzeugt der Abstandssensor 36 ein Abstandssensorsignal, welches die Information über den gemessenen Abstand enthält.

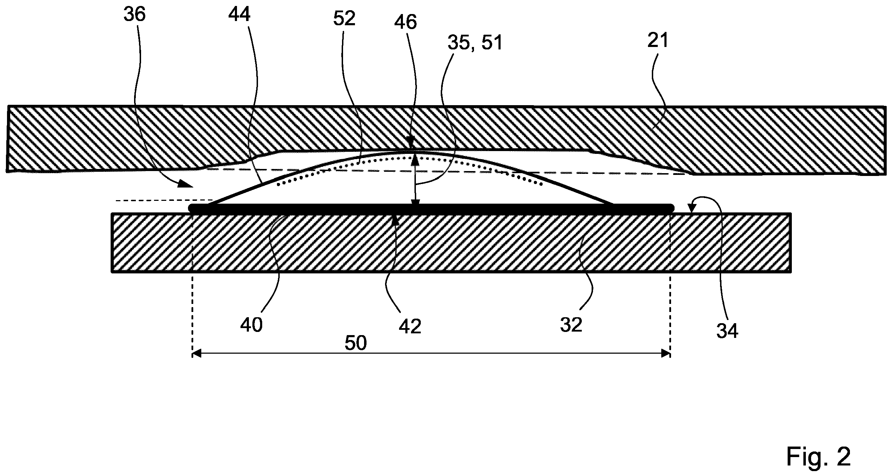

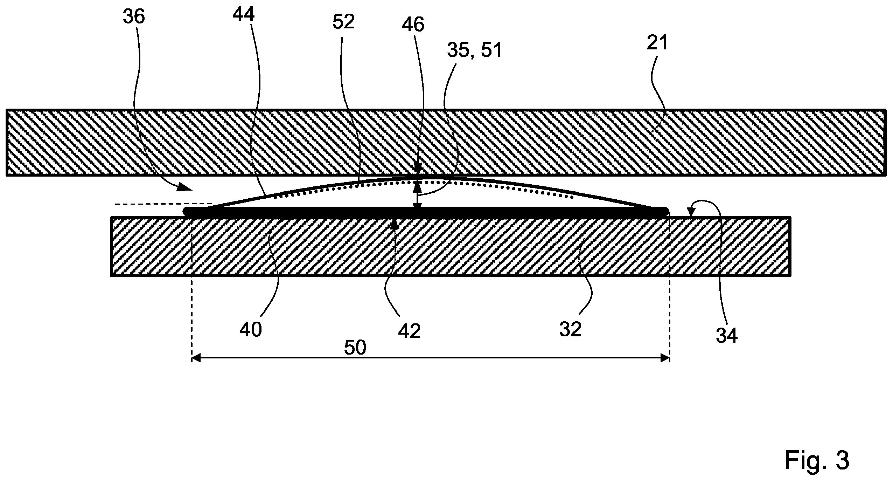

Der Abstandssensor, welcher in Figur 2 und Figur 3 detaillierter dargestellt ist, weist eine Grundplatte 40 mit einer Auflagefläche 42, mit welcher der Abstandssensor 36 auf der Rotorspitzenfläche 34 aufliegt und diese kontaktiert. Die Auflagefläche 42 ist somit radial nach innen zu der ersten Rotorachse 19 hin orientiert. Auf der der Auflagefläche 42 abgewandten Seite erstreckt sich ein Abtastblech 44 konvex gebogen über die Grundplatte 40. Das Abtastblech 44 weist eine Abtastfläche 46 auf, welche die Mischkammerwand 21 bei dem Messchritt wie in Figuren 2 und 3 gezeigt kontaktiert.

Die Grundplatte 40 weist hierbei eine Grundplattenbreite 48 von lediglich 15 mm auf. Die Grundplattenlänge 50 beträgt 50 mm. Somit ist die Grundplatte 40 nach dem Montageschritt flächig auf der Mischrotorspitze 32 befestigt.

Der Abstandssensors 36 kann bei dem Montageschritt auf der Rotorspitzenfläche 34 in verschiedenen Ausrichtungen angeordnet und befestigt werden. Gemäß den Darstellungen der Figuren 1 bis 3 ist in diesem Ausführungsbeispiel der Abstandssensor 36 in einer Ausrichtung auf der Rotorspitzenfläche 34 angeordnet und befestigt, bei der die Grundplattenlänge 50 sich im Wesentlichen parallel zu der Axialrichtung 26 erstreckt. Alternativ ist in einer anderen Variante ebenso möglich, dass der Abstandssensor 36 demgegenüber gedreht, beispielsweise um 90 Grad gedreht, mit seiner Auflagefläche 42 auf der Rotorspitzenfläche 34 angeordnet und befestigt wird. Selbstverständlich kann der Abstandssensor 36 auch um andere Winkelbeträge gegenüber seiner Ausrichtung des Ausführungsbeispiels verdreht auf der Rotorspitzenfläche 34 angeordnet und befestigt werden.

Der Abstandssensor 36 weist eine veränderliche Höhe 51 auf, die durch ein Zusammendrücken des Abtastblechs gegen dessen elastische Federkraft reduzierbar ist. An Stellen der Mischkammerwand 21 mit tieferem Verschleiß, wie in Fig. 2 schematisch dargestellt, gibt das Abtastblech mit der Federkraft entsprechend der Verschleißtiefe in der Mischkammerwand 21 mechanisch kontaktierend nach. An sensierten Bereichen der Mischkammerwand 21 mit geringerem Verschleiß und somit einer geringeren Spaltdicke 35, wie in Figur 3 gezeigt, bleibt der Abstandssensor 36 weiter zusammengedrückt als bei größerem Verschleiß, wie er sich bei Fig. 2 in die Mischkammerwand über die gestrichelte Linie hinein erstreckt. Entsprechend der Spaltdicke 35 und somit entsprechend dem Ausmaß, in dem der Abstandssensor 36 zusammengedrückt ist, wird das Abstandssensorsignal erzeugt oder beeinflusst, so dass aus diesem die Information über die zugehörige gemessene Spaltdicke 35 auswertbar ist. Das Beeinflussen des Abstandssensorsignals kann beispielsweise über einen an dem Abtastblech 36 angeordneten Dehnungsmessstreifen 52 erfolgen.

Der Abstandssensor weist vorliegend eine aufbauende Mindesthöhe 53 von weniger als 2,5 m auf. Die aufbauende Mindesthöhe 53 ist der verbleibende Mindestabstand zwischen der Auflagefläche 42 und der Abtastfläche 46 im weitest möglich zusammengedrückten Zustand des Abstandssensors 36.

Der Messaufbau umfasst weiterhin einen Winkelsensor 54, welcher die Winkelposition des ersten Mischrotors 12 in Bezug auf die Mischkammer 8 sensiert. Hierzu sensiert der Winkelsensor 52 eine Information über die Winkelposition der ersten Rotorwelle 16 und erzeugt ein der Winkelposition entsprechendes Winkelsensorsignal.

Der Messaufbau weist weiterhin eine nicht dargestellte elektronische Auswerteeinheit auf, die durch Auswerten des Winkelsensorsignals die dem Winkelsensorsignal korrespondierenden Winkelpositionswerte des ersten Mischrotors 12 bestimmt. Die Auswerteeinheit oder eine weitere Auswerteeinheit des Messaufbaus bestimmt zudem durch Auswerten des Abstandssensorsignals den jeweiligen Spaltdickenwert, der dem Abstandssensorsignal entspricht. Somit ist bei dem Durchführen des Messchritts entlang der abgefahrenen ersten Tastspur 39a an einer Vielzahl von Messpositionen zu jeder Messposition der zugehörige Winkelpositionswert und der Spaltdickenwert auswertbar, wobei ebenso die zugehörige erste Axialposition 38a bekannt ist. Somit werden die gemessenen Spaltdickenwerte in Abhängigkeit der Winkelposition und der Axialposition ausgewertet. In Kenntnis der nominellen Spaltdickenwerte eines unverschlissenen Mischers 2 ist aus den Spaltdickenwerten nebst deren zugehörigen Koordinaten aus jeweils einem Winkelpositionswert und der Axialposition feststellbar, in welchem Ausmaß die Mischkammerwand an welchen Koordinaten verschlissen ist.

Um den Bereich der Mischkammerwand 21 zwischen dem ersten axialen Ende 22 und dem zweiten axialen Ende 24 nicht nur entlang der einen bisher erwähnten ersten Tastspur 39 bei der ersten Axialposition 38a zu analysieren, sondern ein Gesamtbild der Mischkammerwand 21 in diesem Bereich zu erhalten und eine Bewertung des Ausmaßes des Verschleißes zu ermöglichen, werden die vorgenannten Verfahrensschritte an verschiedenen weiteren Axialpositionen durchgeführt. Hierzu werden eine oder mehrere weitere Montagschritte durchgeführt. Bei diesen weiteren Montageschritten wird jeweils der Abstandssensor 36 an einer anderen Axialposition der Rotorspitzenfläche 34 oder einer anderen Rotorspitzenfläche 34 angeordnet und befestigt. Nach jedem dieser Montageschritte wird ein Messchritt durchgeführt und durch das Abfahren einer Tastspur an der Axialposition entlang der Tastspur der Verlauf des Verschleißes bestimmt.

Beispielsweise ist möglich, dass in einem zweiten Montagschritt der Abstandssensor 36 an einer zweiten Axialposition 38b auf der Mischrotorspitze 32 angeordnet und befestigt wird. Bei einem anschließenden erneuten Durchführen des Messchritts wird der Abstandssensor 36 somit entlang einer zweite Tastspur 39b an der Mischkammerwand 21 geführt, an welcher wiederum Spaltdickenwerte und Winkelpositionswerte zu den abgefahrenen Messpositionen bestimmt werden.

Anschließend kann in einem dritten Montageschritt der Abstandssensor 36 an einer dritten Axialposition 38c einer anderen Rotorspitzenfläche 34 angeordnet und befestigt werden und bei dem folgenden Messschritt der Abstandssensor 36 somit entlang einer dritten Tastspur 39c an der Mischkammerwand 21 geführt werden, an welcher wiederum Spaltdickenwerte und Winkelpositionswerte zu den abgefahrenen Messpositionen bestimmt werden.

Die Gesamtheit der ausgewerteten Messpositionen aus mehreren Tastspuren mit jeweils zugehörigen Spaltdickenwerten, Winkelpositionswerten und Axialpositionswerten erlaubt die Erstellung einer Topografie des quantitativen Verschleißes, so dass eine differenzierte Betrachtung der örtlich verteilten Verschleißtiefen ermöglicht wird.

### Bezugszeichenliste

- 2: Mischer
- 4: untere Mischkammerhälfte
- 6: obere Mischkammerhälfte
- 8: Mischkammer
- 10: Mischergehäuse
- 12: erster Mischrotor
- 14: zweiter Mischrotor
- 16,: erste Rotorwelle
- 18: zweite Rotorwelle
- 19: erste Rotorachse
- 20: zweite Rotorachse
- 21: Mischkammerwand
- 22: erstes axiales Ende
- 24: zweites axiales Ende
- 26: Axialrichtung
- 28: Axialrichtung
- 30: Mischrotor
- 32: Mischrotorspitze
- 34: Rotorspitzenfläche
- 35: Spaltdicke
- 36: Abstandssensor
- 38a: erste Axialposition
- 38b: zweite Axialposition
- 38c: dritte Axialposition
- 39a: erste Tastspur
- 39b: zweite Tastspur
- 39c: dritte Tastspur
- 40: Grundplatte
- 42: Auflagefläche
- 44: Abtastblech
- 46: Abtastfläche
- 48: Grundplattenbreite
- 50: Grundplattenlänge
- 51: Höhe
- 52: Dehnungsmessstreifen
- 53: aufbauende Mindesthöhe
- 54: Winkelsensor

## Patentansprüche

1. Verfahren zur Messung des Verschleißes einer Mischkammerwand eines Mischers, wobei der Mischer (2) wenigstens eine Mischkammer (8), eine die Mischkammer (8) begrenzende Mischkammerwand (21) und einen innerhalb der Mischkammer (8) angeordneten und um eine Rotorachse (19, 20) rotierbaren Mischrotor (12, 14) mit wenigstens einer Mischrotorspitze (32) aufweist, umfassend die folgenden Verfahrensschritte:
- einen ersten Montageschritt, umfassend ein Anordnen und wiederlösbares Befestigen eines Abstandssensors (36), der eine Auflagefläche (42) und eine Abtastfläche (46) aufweist, mit der Auflagefläche (42) an einer ersten Axialposition (38a) der Mischrotorspitze (32),
- einen nach dem ersten Montageschritt durchgeführten Messschritt, umfassend ein Verdrehen des Mischrotors (12, 14) innerhalb der Mischkammer (8), und umfassend ein Auswerten eines Abstandssensorsignals des Abstandssensors (36),
wobei
der Abstandssensor (36) ein taktiler Sensor ist, wobei während des Messschritts die Auflagefläche (42) die Mischrotorspitze (32) kontaktiert und die Abtastfläche (46) die Mischkammerwand (21) kontaktiert.

2. Verfahren zur Messung des Verschleißes einer Mischkammerwand eines Mischers nach Anspruch 1, **dadurch gekennzeichnet, dass** die Mischrotorspitze (32) eine in Bezug auf die Rotorachse (19, 20) radial nach außen hin gerichtete Rotorspitzenfläche (34) aufweist, auf welcher bei dem Montageschritt das Anordnen und Befestigen des Abstandssensors (36) erfolgt.

3. Verfahren zur Messung des Verschleißes einer Mischkammerwand eines Mischers nach Anspruch 2, **dadurch gekennzeichnet, dass** die Rotorspitzenfläche (34) eine Breite von weniger als 50 mm, insbesondere von weniger als 30mm, weiter insbesondere von weniger als 20 mm aufweist.

4. Verfahren zur Messung des Verschleißes einer Mischkammerwand eines Mischers nach einem der vorhergehenden Ansprüche, **dadurch gekennzeichnet, dass** der Mischer (2) ein Tangentialmischer, insbesondere ein Tangentialmischer für die Herstellung von Materialmischungen für die Reifenherstellung ist, weiter insbesondere ein Tangentialmischer für die Herstellung von Grundmischungen für die Reifenherstellung.

5. Verfahren zur Messung des Verschleißes einer Mischkammerwand eines Mischers nach einem der vorhergehenden Ansprüche, **dadurch gekennzeichnet, dass** während zumindest eines Teils des Messschritts die Mischkammerwand (21) und die Mischrotorspitze (32), insbesondere die Rotorspitzenfläche (34), durch einen Radialspalt voneinander beabstandet angeordnet sind oder werden.

6. Verfahren zur Messung des Verschleißes einer Mischkammerwand eines Mischers nach Anspruch 5, **dadurch gekennzeichnet, dass** der Radialspalt eine Spaltdicke (35) zwischen 3 mm und 10 mm, insbesondere zwischen 3 mm und 8 mm, weiter insbesondere zwischen 3 und bis 5 mm, aufweist.

7. Verfahren zur Messung des Verschleißes einer Mischkammerwand eines Mischers nach einem der vorhergehenden Ansprüche, **dadurch gekennzeichnet, dass** der Abstandssensor (36) eine Grundplatte (40) und ein Abtastblech (44) aufweist, welches sich als konvexer Bogen über einen Bereich der Grundplatte (40) erstreckt, wobei die Grundplatte (40) die Auflagefläche (42) aufweist und der konvexe Bogen die Abtastfläche (46) aufweist.

8. Verfahren zur Messung des Verschleißes einer Mischkammerwand eines Mischers nach einem der vorhergehenden Ansprüche, **dadurch gekennzeichnet, dass** der Abstandssensor (36) eine aufbauende Mindesthöhe (53) von weniger als 3 mm, insbesondere von weniger als 2,5 mm, aufweist.

9. Verfahren zur Messung des Verschleißes einer Mischkammerwand eines Mischers nach einem der vorhergehenden Ansprüche, **dadurch gekennzeichnet, dass** der Abstandssensor (36), insbesondere die Grundplatte (40), eine Grundplattenbreite (48) von höchstens 50 mm, insbesondere von höchstens 30 mm, insbesondere von höchstens 20 mm, aufweist.

10. Verfahren zur Messung des Verschleißes einer Mischkammerwand eines Mischers nach einem der vorhergehenden Ansprüche, **dadurch gekennzeichnet, dass** ein Winkelsensor (54) die Winkelposition des Mischrotors (12, 14) in Bezug auf die Mischkammer (8) sensiert und ein der Winkelposition korrespondierendes Winkelsensorsignal erzeugt.

11. Verfahren zur Messung des Verschleißes einer Mischkammerwand eines Mischers nach einem der vorhergehenden Ansprüche, **dadurch gekennzeichnet, dass** durch Auswerten des Abstandssensorsignals, insbesondere mittels einer Auswerteeinheit, korrespondierende Spaltdickenwerte und/oder Verschleißtiefenwerte bestimmt werden.

12. Verfahren zur Messung des Verschleißes einer Mischkammerwand eines Mischers nach einem der vorhergehenden Ansprüche, **dadurch gekennzeichnet, dass** durch Auswerten des Winkelsensorsignals, insbesondere mit einer oder der Auswerteeinheit, korrespondierende Winkelpositionswerte bestimmt werden.

13. Verfahren zur Messung des Verschleißes einer Mischkammerwand eines Mischers nach einem der vorhergehenden Ansprüche, **dadurch gekennzeichnet, dass** bei dem Messschritt durch das Verdrehen des Mischrotors (12, 14) der Abstandssensor (36), insbesondere die Abtastfläche (46), entlang einer Tastspur (39a, 39b, 39c) über die Mischkammerwand (21) geführt wird.

14. Verfahren zur Messung des Verschleißes einer Mischkammerwand eines Mischers nach einem der vorhergehenden Ansprüche, **dadurch gekennzeichnet, dass** entlang der Tastspur (39a, 39b, 39c) oder entlang der Tastspuren (39a, 39b, 39c) verschiedenen einzelnen Messpositionen des Abstandssensors (36) jeweils ein zugehöriger Winkelpositionswert, ein zugehöriger Spaltdickenwert und/oder Verschleißtiefenwert und ein zugehöriger Axialabstandswert zugeordnet werden, und dass eine topografische Karte der Spaltdickenwerte und/oder der Verschleißtiefenwerte abhängig von dem Winkelpositionswert und dem Axialabstandswert erstellt wird.

15. Verwendung eines taktilen Sensors zum Durchführen des Verfahrens nach einem der Ansprüche 1 bis 14 zum Bestimmen eines Spaltdickenwerts zwischen einer Mischrotorspitze (32) und einer Mischkammerwand (21) eines Mischers (2).

## Claims

1. Method for measuring the wear of a mixing chamber wall of a mixer, wherein the mixer (2) has at least one mixing chamber (8), a mixing chamber wall (21), which bounds the mixing chamber (8), and a mixing rotor (12, 14), which is arranged within the mixing chamber (8), can be rotated about a rotor axis (19, 20) and has at least one mixing rotor tip (32), comprising the following method steps:
- a first assembly step, comprising arranging and releasably fastening a distance sensor (36), which has a bearing surface (42) and a sensing surface (46), with the bearing surface (42) at a first axial position (38a) of the mixing rotor tip (32),
- a measuring step, carried out after the first assembly step, comprising turning the mixing rotor (12, 14) within the mixing chamber (8), and comprising evaluating a distance sensor signal of the distance sensor (36),
wherein
the distance sensor (36) is a tactile sensor, wherein, during the measuring step, the sensing surface (42) makes contact with the mixing rotor tip (32) and the sensing surface (46) makes contact with the mixing chamber wall (21).

2. Method for measuring the wear of a mixing chamber wall of a mixer according to Claim 1, **characterized in that** the mixing rotor tip (32) has a rotor tip surface (34) which is directed radially outward in relation to the rotor axis (19, 20) and on which the distance sensor (36) is arranged and fastened during the assembly step.

3. Method for measuring the wear of a mixing chamber wall of a mixer according to Claim 2, **characterized in that** the rotor tip surface (34) has a width of less than 50 mm, in particular of less than 30 mm, more particularly of less than 20 mm.

4. Method for measuring the wear of a mixing chamber wall of a mixer according to any of the preceding claims, **characterized in that** the mixer (2) is a tangential mixer, in particular a tangential mixer for producing material mixtures for tyre production, more particularly a tangential mixer for producing base mixtures for tyre production.

5. Method for measuring the wear of a mixing chamber wall of a mixer according to any of the preceding claims, **characterized in that**, during at least part of the measuring step, the mixing chamber wall (21) and the mixing rotor tip (32), in particular the rotor tip surface (34), are or will be arranged spaced apart from one another by a radial gap.

6. Method for measuring the wear of a mixing chamber wall of a mixer according to Claim 5, **characterized in that** the radial gap has a gap thickness (35) of between 3 mm and 10 mm, in particular between 3 mm and 8 mm, more particularly between 3 and up to 5 mm.

7. Method for measuring the wear of a mixing chamber wall of a mixer according to any of the preceding claims, **characterized in that** the distance sensor (36) has a base plate (40) and a sensing plate (44), which extends as a convex arc over a region of the base plate (40), wherein the base plate (40) has the bearing surface (42) and the convex arc has the sensing surface (46).

8. Method for measuring the wear of a mixing chamber wall of a mixer according to any of the preceding claims, **characterized in that** the distance sensor (36) has a built-up minimum height (53) of less than 3 mm, in particular of less than 2.5 mm.

9. Method for measuring the wear of a mixing chamber wall of a mixer according to any of the preceding claims, **characterized in that** the distance sensor (36), in particular the base plate (40), has a base plate width (48) of at most 50 mm, in particular of at most 30 mm, in particular of at most 20 mm.

10. Method for measuring the wear of a mixing chamber wall of a mixer according to any of the preceding claims, **characterized in that** an angle sensor (54) senses the angular position of the mixing rotor (12, 14) in relation to the mixing chamber (8) and generates an angle sensor signal corresponding to the angular position.

11. Method for measuring the wear of a mixing chamber wall of a mixer according to any of the preceding claims, **characterized in that** corresponding gap thickness values and/or wear depth values are determined by evaluating the distance sensor signal, in particular by means of an evaluation unit.

12. Method for measuring the wear of a mixing chamber wall of a mixer according to any of the preceding claims, **characterized in that** corresponding angular position values are determined by evaluating the angle sensor signal, in particular with a or the evaluation unit.

13. Method for measuring the wear of a mixing chamber wall of a mixer according to any of the preceding claims, **characterized in that**, during the measuring step, the distance sensor (36), in particular the sensing surface (46), is guided along a sensing track (39a, 39b, 39c) over the mixing chamber wall (21) by turning the mixing rotor (12, 14).

14. Method for measuring the wear of a mixing chamber wall of a mixer according to any of the preceding claims, **characterized in that** an associated angular position value, an associated gap thickness value and/or wear depth value and an associated axial distance value are each assigned to different individual measuring positions of the distance sensor (36) along the sensing track (39a, 39b, 39c) or along the sensing tracks (39a, 39b, 39c), and **in that** a topographic map of the gap thickness values and/or the wear depth values is created depending on the angular position value and the axial distance value.

15. Use of a tactile sensor for carrying out the method according to any of Claims 1 to 14 for determining a gap thickness value between a mixing rotor tip (32) and a mixing chamber wall (21) of a mixer (2).

## Revendications

1. Procédé de mesure de l'usure d'une paroi de chambre de mélange d'un mélangeur, le mélangeur (2) comprenant au moins une chambre de mélange (8), une paroi de chambre de mélange (21) délimitant la chambre de mélange (8) et un rotor de mélange (12, 14) disposé à l'intérieur de la chambre de mélange (8) et pouvant tourner autour d'un axe de rotor (19, 20), avec au moins une pointe de rotor de mélange (32), le procédé comprenant les étapes suivantes :
- une première étape de montage comprenant une disposition et une fixation amovible d'un capteur de distance (36), présentant une surface d'appui (42) et une surface de détection (46), par sa surface d'appui (42) à une première position axiale (38a) de la pointe de rotor de mélange (32),
- une étape de mesure effectuée après la première étape de montage, comprenant une rotation du rotor de mélange (12, 14) à l'intérieur de la chambre de mélange (8) et une évaluation d'un signal du capteur de distance (36),
dans lequel
le capteur de distance (36) est un capteur tactile, la surface d'appui (42) étant en contact avec la pointe de rotor de mélange (32) et la surface de détection (46) étant en contact avec la paroi de chambre de mélange (21) pendant l'étape de mesure.

2. Procédé de mesure de l'usure d'une paroi de chambre de mélange d'un mélangeur selon la revendication 1, **caractérisé en ce que** la pointe de rotor de mélange (32) présente une surface de pointe de rotor (34) orientée radialement vers l'extérieur par rapport à l'axe de rotor (19, 20), sur laquelle le capteur de distance (36) est disposé et fixé lors de l'étape de montage.

3. Procédé de mesure de l'usure d'une paroi de chambre de mélange d'un mélangeur selon la revendication 2, **caractérisé en ce que** la surface de pointe de rotor (34) présente une largeur inférieure à 50 mm, en particulier inférieure à 30 mm, plus particulièrement inférieure à 20 mm.

4. Procédé de mesure de l'usure d'une paroi de chambre de mélange d'un mélangeur selon l'une des revendications précédentes, **caractérisé en ce que** le mélangeur (2) est un mélangeur tangentiel, en particulier un mélangeur tangentiel destiné à la fabrication de mélanges de matériaux pour la fabrication de pneumatiques, plus particulièrement un mélangeur tangentiel destiné à la fabrication de mélanges de base pour la fabrication de pneumatiques.

5. Procédé de mesure de l'usure d'une paroi de chambre de mélange d'un mélangeur selon l'une des revendications précédentes, **caractérisé en ce que**, pendant au moins une partie de l'étape de mesure, la paroi de chambre de mélange (21) et la pointe de rotor de mélange (32), en particulier la surface de pointe de rotor (34), sont disposées ou sont mises à distance l'une de l'autre par un jeu radial.

6. Procédé de mesure de l'usure d'une paroi de chambre de mélange d'un mélangeur selon la revendication 5, **caractérisé en ce que** le jeu radial présente une épaisseur de jeu (35) comprise entre 3 mm et 10 mm, en particulier entre 3 mm et 8 mm, plus particulièrement entre 3 mm et 5 mm.

7. Procédé de mesure de l'usure d'une paroi de chambre de mélange d'un mélangeur selon l'une des revendications précédentes, **caractérisé en ce que** le capteur de distance (36) présente une plaque de base (40) et une tôle de détection (44) qui s'étend sous la forme d'un arc convexe au-dessus d'une région de la plaque de base (40), la plaque de base (40) présentant la surface d'appui (42) et l'arc convexe présentant la surface de détection (46).

8. Procédé de mesure de l'usure d'une paroi de chambre de mélange d'un mélangeur selon l'une des revendications précédentes, **caractérisé en ce que** le capteur de distance (36) présente une hauteur minimale en saillie (53) inférieure à 3 mm, en particulier inférieure à 2,5 mm.

9. Procédé de mesure de l'usure d'une paroi de chambre de mélange d'un mélangeur selon l'une des revendications précédentes, **caractérisé en ce que** le capteur de distance (36), en particulier la plaque de base (40), présente une largeur de plaque de base (48) d'au plus 50 mm, en particulier d'au plus 30 mm, en particulier d'au plus 20 mm.

10. Procédé de mesure de l'usure d'une paroi de chambre de mélange d'un mélangeur selon l'une des revendications précédentes, **caractérisé en ce qu'**un capteur d'angle (54) détecte la position angulaire du rotor de mélange (12, 14) par rapport à la chambre de mélange (8) et génère un signal de capteur d'angle correspondant à la position angulaire.

11. Procédé de mesure de l'usure d'une paroi de chambre de mélange d'un mélangeur selon l'une des revendications précédentes, **caractérisé en ce que** des valeurs correspondantes d'épaisseur de jeu et/ou de profondeur d'usure sont déterminées par évaluation du signal du capteur de distance, en particulier au moyen d'une unité d'évaluation.

12. Procédé de mesure de l'usure d'une paroi de chambre de mélange d'un mélangeur selon l'une des revendications précédentes, **caractérisé en ce que** des valeurs de position angulaire correspondantes sont déterminées par évaluation du signal du capteur d'angle, en particulier au moyen d'une unité d'évaluation ou de l'unité d'évaluation.

13. Procédé de mesure de l'usure d'une paroi de chambre de mélange d'un mélangeur selon l'une des revendications précédentes, **caractérisé en ce que**, lors de l'étape de mesure, la rotation du rotor de mélange (12, 14) guide le capteur de distance (36), en particulier la surface de détection (46), le long d'une trajectoire de palpage (39a, 39b, 39c) sur la paroi de chambre de mélange (21).

14. Procédé de mesure de l'usure d'une paroi de chambre de mélange d'un mélangeur selon l'une des revendications précédentes, **caractérisé en ce qu'**à différentes positions de mesure individuelles du capteur de distance (36) le long de la trajectoire de palpage (39a, 39b, 39c) ou des trajectoires de palpage (39a, 39b, 39c) sont respectivement associées une valeur de position angulaire correspondante, une valeur d'épaisseur de jeu et/ou une valeur de profondeur d'usure correspondante et une valeur de distance axiale correspondante, et **en ce qu'**une carte topographique des valeurs d'épaisseur de jeu et/ou des valeurs de profondeur d'usure est établie en fonction de la valeur de position angulaire et de la valeur de distance axiale.

15. Utilisation d'un capteur tactile pour mettre en œuvre le procédé selon l'une des revendications 1 à 14 afin de déterminer une valeur d'épaisseur de jeu entre une pointe de rotor de mélange (32) et une paroi de chambre de mélange (21) d'un mélangeur (2).
